# EUROPEAN PATENT APPLICATION

(11) **EP 2 290 920 A2**
(43) Date of publication of application: **02.03.2011**
(21) Application number: 10174240.1
(22) Date of filing: 27.08.2010
(51) Int. Cl.: H04M 1/02

(54) **Slidable mobile terminal**

(30) Priority: 27.08.2009 JP 2009196364
(71) Applicant: Funai Electric Co., Ltd., Daito-shi, Osaka 574-0013 (JP)
(72) Inventor: Yamagiwa, Daisuke, Daito-shi Osaka 574-0013 (JP); Shingin, Yasuhiro, Daito-shi Osaka 574-0013 (JP)
(74) Representative: Grünecker, Kinkeldey, Stockmair & Schwanhäusser Anwaltssozietät

(57) **Abstract**

A mobile terminal according to the present invention includes: a first housing; a second housing overlaid on the first housing; and a sliding support mechanism that supports the second housing in a manner as to slide with respect to the first housing. A plurality of input portions covered over by the second housing when the second housing is placed at a first position is provided on the first housing. The position of the second housing, that is viewed in the plane from above, can be switched by the sliding support mechanism among: the first position; a second position which is located at an upper right position with respect to the first position, and at which a part of the plurality of input portions is exposed; and a third position which is located at an upper left position with respect to the first position, and at which a part of the plurality of input portions that is different from the part exposed in case of the second position is exposed.

## Description

### BACKGROUND OF THE INVENTION

### 1. Field of the Invention

The present invention relates to a mobile terminal typified by a mobile device such as a smart phone, and more particularly to a slide-type mobile terminal provided with a mechanism for allowing housings to slide mutually.

### 2. Description of Related Art

Various slide-type mobile terminals provided with a mechanism for allowing housings to mutually slide have conventionally been proposed. The slide-type mobile terminal enables such a usage that operation keys are hidden while being carried, and the operation keys are exposed in operation, thereby providing an advantage of excellent portability.

For example, JP-A-2007-158970 discloses a mobile terminal configured to be switched between a closed state in which a main unit (first housing) and a display unit (second housing) are overlaid on each other, and an open state in which the main unit is slid diagonally with respect to the display unit from the closed state. In this mobile terminal, the main unit includes an operation input portion, and the operation input portion provided on the main unit is exposed by the diagonal slide.

Moreover, JP-A-2009-71512 discloses a mobile terminal including three housing which are a first housing, a second housing which slides in a first direction with respect to the first housing, and a third housing which slides in a direction vertical to the first direction with respect to the first housing and the second housing. This mobile terminal is used as follows, for example: when the mobile terminal is used for a phone, the second housing (provided with operation keys for the phone) and the third housing (provided with operation keys for a television) are slid with respect to the first housing (provided with a display unit) while the second housing and the third housing are overlaid on each other. When the mobile terminal is used for watching TV, the third housing is slid with respect to the first and second housing which are overlaid on each other.

### SUMMARY OF THE INVENTION

The functions of the mobile terminals have recently been diversified, and the number of operation keys provided for the mobile terminals tends to increase. Therefore, it is preferred that the number of the operation keys to be exposed by sliding the housings with respect to each other be increased as much as possible. On the other hand, if all the operation keys provided for the mobile terminal appear at once (exposed at once), a user may have an impression that the operation is difficult due to the large number of the operation keys.

Thus, it is considered that operation keys are preferably exposed according to a function the user wants to use as in JP-A-2009-71512 than the case in which all operation keys appear in the open state as in JP-A-2007-158970. However, the number of components increases as the number of the housings increases as in JP-A-2009-71512, which leads to an increase in the cost for the mobile terminal, etc., and is thus not preferred. Moreover, if the number of the housings increases, there also arises a demerit that the switch between operation keys which are exposed and operation keys which are not exposed becomes difficult.

Moreover, in case of a slide-type mobile terminal, there is a possible situation in which the terminal is easy to use for a right-handed user, but difficult to use for a left-handed user depending on the way of the slide. Therefore, it is considered that a configuration easy to use both for a right-handed user and a left-handed user is convenient.

It is therefore an object of the present invention to provide a mobile terminal which is provided with two housing slidable with respect to each other, and easy to use for a user despite of diversified functions. Moreover, it is also an object of the present invention to provide a mobile terminal which is provided with two housings slidable with respect to each other, and is easy to use both for a right-handed user and a left-handed user.

In order to attain the above objects, a mobile terminal according to the present invention includes: a first housing; a second housing overlaid on the first housing; and a sliding support mechanism that supports the second housing in a manner as to slide with respect to the first housing, wherein a plurality of input portions covered over by the second housing when the second housing is placed at a first position is provided on the first housing, and wherein the position of the second housing, that is viewed in the plane from above, can be switched by the sliding support mechanism among: the first position; a second position which is located at an upper right position with respect to the first position, and at which a part of the plurality of input portions is exposed; and a third position which is located at an upper left position with respect to the first position, and at which a part of the plurality of input portions that is different from the part exposed in case of the second position is exposed

According to this configuration, the different input portions can be exposed between the case in which the position of the second housing is switched from the first position to the second position, and the case in which the position of the second housing is switched from the first position to the third position. As a result, it is possible to provide many input portions according to diversity of the functions, and also the input portion covered by the second housing is not entirely exposed by the sliding movement, but the input portion can be exposed partially according to a purpose of use. As a result, it is possible to provide a mobile terminal easy to use for a user despite of diversified functions. Moreover, it is possible to provide a mobile terminal easy to use for both a right-handed user and a left-handed user as described later according to this configuration. Further, since the number of the housings constructing a slide-type mobile terminal is two in the mobile terminal configured in this way, a mobile terminal which is decreased in the number of components and cost can be provided. Moreover, since the number of the housings is only two, the sliding operation is easy.

As a specific configuration example of the mobile terminal having the above-described configuration, the multiple input portions may include a shared portion which is exposed when the position of the second housing is switched from the first position to either of the second position or the third position, a first dedicated portion which is exposed only when the position of the second housing is switched from the first position to the second position, and a second dedicated portion which is exposed only when the position of the second housing is switched from the first position to the third position.

In this configuration, the first dedicated portion and the second dedicated portion may have a different function from each other, or a same function. The former configuration enables provision of a large number of input portions according to the diversity of the functions, and an exposure of the input portion according to a purpose of the usage. The latter configuration can provide a mobile terminal easy to use for both a right-handed user and a left-handed user.

In the mobile terminal configured as described above, at least a part of members forming the sliding support mechanism may be directly attached to the first and second housings. This configuration enables a reduction of the number of the components as much as possible.

In the mobile terminal configured as described above, the sliding support mechanism may be formed by a unit member including a first member that is fixed to the first housing, and a second member that is fixed to the second housing and is arranged in a manner as to slide with respect to the first member. Forming the sliding support mechanism as a unit can facilitate an application of the present invention to multiple types of the mobile terminals at low cost.

In the mobile terminal configured as described above, the sliding support mechanism may include at least one guide groove that is shaped in either one of an approximately upside-down V shape or an approximately V shape and that is provided on either one of a side of the first housing or a side of the second housing, and at least one guide pin that is provided on the other one of the side of the first housing and the side of the second housing, and that is slidably engaged with and held by the guide groove.

In the mobile terminal configured as described above, the sliding support mechanism may include an assist spring which assists the sliding movement of the second housing. Providing such an assist spring enables an increase of the operability of the slide-type mobile terminal.

In the mobile terminal configured as described above, a first guide groove and a second guide groove, each groove being in an approximately upside-down V shape, may be provided in parallel on the side of the second housing, and a first guide pin which may be slidably engaged with and held by the first guide groove, and a second guide pin which may be slidably engaged with and held by the second guide groove may be provided on the side of the first housing. In this configuration, the first guide groove and the second guide groove are preferably connected continuously with each other. This enables a reduction of the size of the mobile terminal.

In the mobile terminal configured as described above, the sliding support mechanism may include a first torsional spring and a second torsional spring, both springs serving as assist springs for assisting the sliding movement of the second housing, one end of the first torsional spring may be rotatably supported by the first guide pin and the other end may be rotatably supported by a first spring holding pin provided on the side of the second housing, and one end of the second torsional spring may be rotatably supported by the second guide pin and the other end may be rotatably supported by a second spring holding pin provided on the side of the second housing.

As described above, according to the present invention, it is possible to provide a mobile terminal provided with two housings slidable with respect to each other, which is easy to use for a user despite of the diversity of the functions. Moreover, according to the present invention, it is possible to provide a mobile terminal provided with two housings slidable with respect to each other, which is easy to use for both a right-handed user and a left-handed user.

### BRIEF DESCRIPTION OF THE DRAWINGS

Fig. 1 is an exploded perspective view showing a schematic configuration of a mobile terminal according to a present embodiment;
Fig. 2 is a schematic plan view, which is seen from a bottom surface side, of a display-side housing provided for the mobile terminal according to the present embodiment;
Fig. 3 is a schematic plan view showing a state where the mobile terminal according to the present embodiment is closed;
Fig. 4A is a schematic plan view for describing an open state (first open state) of the mobile terminal according to the present embodiment;
Fig. 4B is a schematic plan view for describing an open state (second open state) of the mobile terminal according to the present embodiment;
Fig. 5 is a schematic plan view for describing an operation when the mobile terminal according to the present embodiment is switched from the closed state to the open state;
Fig. 6A is a cross sectional view for describing a first another embodiment of the present invention; and
Fig. 6B is a cross sectional view for describing a second another embodiment of the present invention.

### DETAILED DESCRIPTION OF PREFERRED EMBODIMENTS

A detailed description will now be given of embodiments of a mobile terminal according to the present invention referring to drawings. It should be noted that the mobile terminal according to the present invention is embodied as a mobile phone (including a smart phone), a personal handy-phone system (PHS) terminal, a personal digital assistant (PDA), a personal computer (PC), and a mobile game machine, for example.

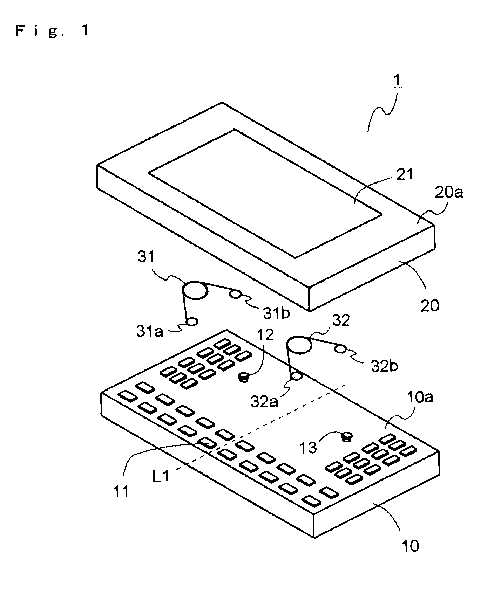

Fig. 1 is an exploded perspective view showing a schematic configuration of the mobile terminal according to a present embodiment. A mobile terminal 1 according to the present embodiment includes an operation-side housing 10, and a display-side housing 20 overlaid on the operation-side housing 10 as shown in Fig. 1.

The operation-side housing 10 is formed by a synthetic resin or a metal, for example, and the shape thereof is an approximately cuboid. Multiple input keys (input portions) 11 are provided on a top surface 10a (surface opposed to the display-side housing 20 to be overlaid) of the operation-side housing 10. A user uses the multiple input keys 11 to operate various functions provided for the mobile terminal 1. When the top surface 10a of the operation-side housing 10 is viewed in the plane, the multiple input keys 11 are provided in an area in an approximately U shape including a lower portion side and left and right sides on the mobile terminal 1.

Though the input portions 11 provided for operating the various functions provided for the mobile terminal 1 may be the input buttons as in the present embodiment, the input portions 11 are not limited to them, and may by touch panels and the like.

Two guide pins including a first guide pin 12 and a second guide pin 13 are arranged in a fixed form on the top surface 10a of the operation-side housing 10 in addition to the multiple input keys 11. Though these two guide pins 12, 13 are members independent of the operation-side housing 10 in the present embodiment, they may be integrally provided with the operation-side housing 10. These two guide pins 12, 13 are provided close to the center of the top surface 10a of the operation-side housing 10, and the positions at which the first guide pin 12 and the second guide pin 13 are provided are line-symmetrical with respect to a line L1 dividing the top surface 10a into equal two parts in the lengthwise direction.

The display-side housing 20 is formed by a synthetic resin or a metal, for example, and the shape thereof is an approximately cuboid. In the mobile terminal 1 according to the present embodiment, the shapes of both the operation-side housing 10 and the display-side housing 20, viewed in the plane from above, are rectangular shapes, and lengths thereof in the lengthwise direction and widthwise direction are approximately the same. A display unit 21 is provided on the display-side housing 20 so that the top surface 20a serves as a display surface.

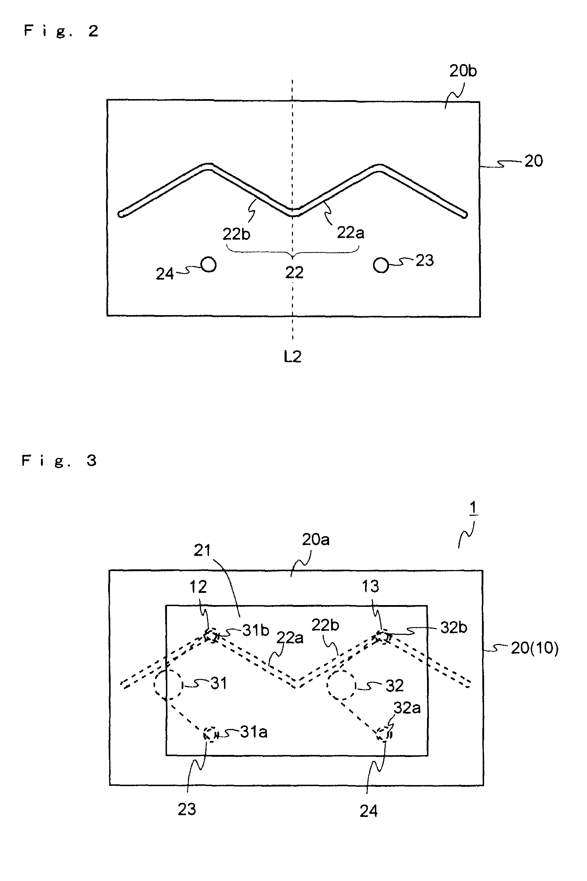

Fig. 2 is a schematic plan view that the display-side housing provided for the mobile terminal according to the present embodiment is seen from the bottom. A guide groove 22 in an approximately M shape in which a first guide groove 22a and a second guide groove 22b which are in an approximately upside-down V shape are continuously connected to each other is formed on the bottom surface 20b of the display-side housing 20 as shown in Fig. 2. The first guide groove 22a and the second guide groove 22b are line-symmetrical with respect to a line L2 which divides the bottom surface 20b of the display-side housing 20 into two equal parts in the lengthwise direction.

Moreover, a first spring holding pin 23 for holding one end 31a of a first torsional spring 31 disposed between the operation-side housing 10 and the display-side housing 20, and a second spring holding pin 24 for holding one end 32a of a second torsional spring 32 disposed therebetween are arranged in a fixed form on the bottom surface 20b of the display-side housing 20. Though these two spring holding pins 23, 24 are members independent of the display-side housing 20 in the present embodiment, they may be integrally provided with the display-side housing 20. These two spring holding pins 23, 24 are provided on a lower side with respect to the guide groove 22 in the approximately M shape, and the positions at which the first spring holding pin 23 and the second spring holding pin 24 are provided are line-symmetrical with respect to the line L2 dividing the bottom surface 20b into equal two parts in the lengthwise direction as shown in Fig. 2.

The first guide pin 12 on the operation-side housing 10 is engaged with and held by the first guide groove 22a of the display-side housing 20, and the second guide pin 13 on the operation-side housing 10 is engaged with and held by the second guide groove 22b of the display-side housing 20 so that the operation-side housing 10 and the display-side housing 20 are integrated. It should be noted that the first guide pin 12 is slidably engaged with and held by the first guide groove 22a, and the second guide pin 13 is slidably engaged with and held by the second guide groove 22b. In other words, the mobile terminal 1 is configured to support the display-side housing 20 in a manner as to slide with respect to the operation-side housing 10.

It should be noted that the operation-side housing 10 and the display-side housing 20 are electrically connected with each other by a signal cable, which is not shown. This signal cable is formed by a flexible member, and is configured such that the electrical connection between both the operation-side housing 10 and the display-side housing 20 is maintained even when the display-side housing 20 slides with respect to the operation-side housing 10.

Moreover, when integrating the operation-side housing 10 and the display-side housing 20 with each other, the first torsional spring 31 and the second torsional spring 32 are rotatably held between the operation-side housing 10 and the display-side housing 20. The one end 31a of the first torsional spring 31 is rotatably held by the first spring holding pin 23 provided on the display-side housing 20, and the other end 31b thereof is rotatably held by the first guide pin 12 provided on the operation-side housing 10. The one end 32a of the second torsional spring 32 is rotatably held by the second spring holding pin 24 provided on the display-side housing 20, and the other end 32b thereof is rotatably held by the second guide pin 13 provided on the operation-side housing 10. These two torsional springs 31, 32 function as assist springs for assisting the sliding movement of the display-side housing 20. The detail of the function will be described later.

It should be noted that the first guide pin 12, the second guide pin 13, and the guide groove 22 (constructed by the first guide groove 22a and the second guide groove 22b) in the mobile terminal 1 form an embodiment of a sliding support mechanism according to the present invention. And, the sliding support mechanism also includes the first torsional spring 31 and the second torsional spring 32 in the mobile terminal 1 according to the present embodiment.

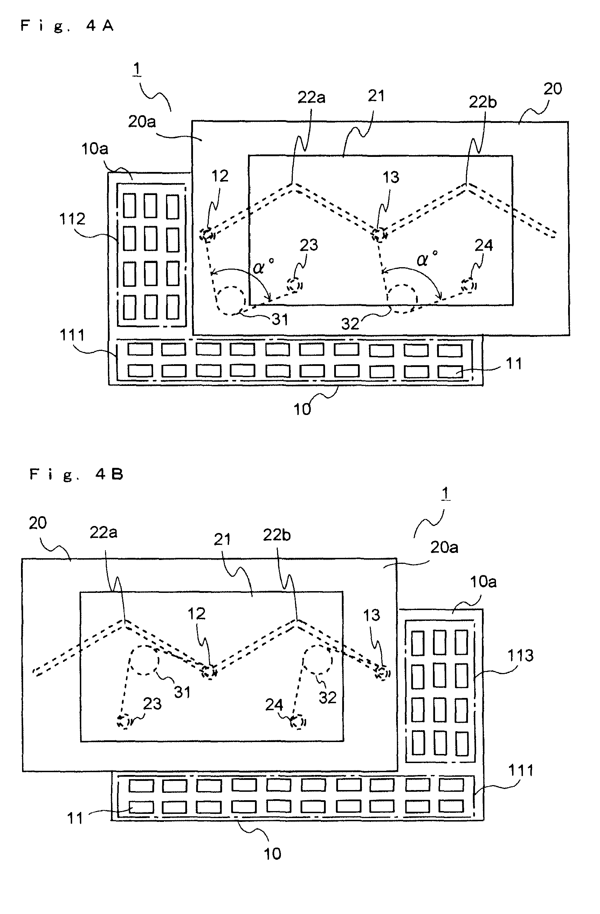

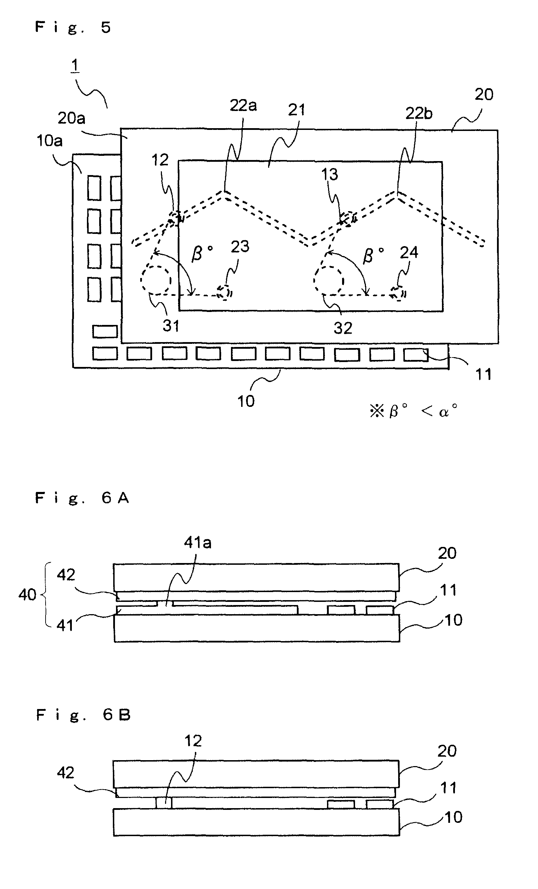

A description will now be given of an operation of the mobile terminal 1 according to the present embodiment configured as described above referring to Figs. 3, 4A, 4B, and 5. Fig. 3 is a schematic plan view to show the state where the mobile terminal according to the present embodiment is closed. Fig. 4A is a schematic plan view for describing an open state (first open state) of the mobile terminal according to the present embodiment. Fig. 4B is a schematic plan view for describing an open state (second open state) of the mobile terminal according to the present embodiment. Fig. 5 is a schematic plan view for describing an operation when the mobile terminal according to the present embodiment is switched from the closed state to the open state.

The members constructing the sliding support mechanism are represented by broken lines for facilitating the understanding of the operation of the mobile terminal 1 in Figs. 3, 4A, 4B, and 5.

The state shown in Fig. 3 is a state in which the operation-side housing 10 and the display-side housing 20 having the same sizes in both the lengthwise and widthwise directions when viewed in the plane from above are superposed so as to align respective sides thereof to each other. All the multiple input keys 11 provided on the top surface 10a of the operation-side housing 10 are covered over by the display-side housing 20 in this state.

The user cannot use the input keys 11 on the operation-side housing 10 to operate the mobile terminal 1 in this state, and this state is a convenient state used for carrying the mobile terminal 1, for example. The compact state in which the display-side housing 20 covers over the multiple input keys 11 of the operation-side housing 10 is referred to as closed state herein.

The position of the display-side housing 20 in the closed state corresponds to an embodiment of a first position according to the present invention. It should be noted that the first position according to the present invention does not always mean a position in which all the input keys provided on the operation-side housing are covered. This is because the input keys may be provided on a side surface portion of the operation-side housing 10, for example, as another embodiment of the present invention.

Moreover, though the sizes in both the lengthwise and widthwise directions are the same when the operation-side housing 10 and the display-side housing 20 are viewed in the plane from above according to the present embodiment, the present invention can be applied also to a case in which the sizes in the lengthwise or widthwise direction of the both is different from each other. When the size is different in this way, a part of the input keys may be exposed in the closed state. Regarding this point, the first position according to the present invention does not always mean a position in which all the input keys provided on the operation-side housing are covered.

The first open state shown in Fig. 4A is obtained by relatively moving the position of the display-side housing 20 with respect to the operation-side housing 10 upward and rightward from the closed state (refer to Fig. 3). In other words, the first open state is obtained by an operation that the two guide pins 12, 13 provided on the operation-side housing 10 relatively move leftward and downward along the guide groove 22 provided on the display-side housing 20. The expressions relating to the directions herein assume the case in which the display-side housing 20 is viewed in the plane from above (the side on which the display unit 21 is present is the top surface). Moreover, the position of the display-side housing 20 in the first open state corresponds to an embodiment of a second position according to the present invention.

A part of the multiple input keys 11 provided on the operation-side housing 10 covered by the display-side housing 20 are exposed by switching from the closed state to the first open state as shown in Fig. 4A. Specifically, a shared key group (shared portion) 111 provided on a lower portion side on the operation-side housing top surface 10a and a first dedicated key group (first dedicated portion) 112 provided on a left side of the operation-side housing top surface 10a are exposed by switching from the closed state to the first open state.

On the other hand, the second open state shown in Fig. 4B is obtained by relatively moving the position of the display-side housing 20 with respect to the operation-side housing 10 upward and leftward from the closed state (refer to Fig. 3). In other words, the second open state is obtained by an operation that the two guide pins 12, 13 provided on the operation-side housing 10 relatively move rightward and downward along the guide groove 22 provided on the display-side housing 20. The expressions relating to the directions herein assume the case in which the display-side housing 20 is viewed in the plane from above, as similarly as in the description of the first open state. Moreover, the position of the display-side housing 20 in the second open state corresponds to an embodiment of a third position according to the present invention.

A part (which is different from a part in case of the first open state) of the multiple input keys 11 provided on the operation-side housing 10 covered by the display-side housing 20 are exposed by switching from the closed state to the second open state as shown in Fig. 4B. Specifically, the shared key group (shared portion) 111 provided on the lower portion side on the operation-side housing top surface 10a and a second dedicated key group (second dedicated portion) 113 provided on a right side of the operation-side housing top surface 10a are exposed by switching from the closed state to the second open state.

In other words, the shared key group 111 is exposed whether the closed state is switched to the first open state or the second open state in the mobile terminal 1 according to the present embodiment. Moreover, the first dedicated key group 112 is exposed only when the closed state is switched to the first open state, and the second dedicated key group 113 is exposed only when the closed state is switched to the second open state.

An input key group similar to a full keyboard for a personal computer, for example, can be assigned to the shared key group 111. Moreover, an input key group for operating a telephone, an input key group for operating audio, an input key group for recording and reproducing images, an input key group for operating a camera, and an input key group for operating games, for example, can be assigned to the dedicated key groups 112, 113.

Input keys different in functions may be assigned to the first dedicated key group 112 and the second dedicated key group 113, respectively. Alternatively, input keys having same functions may be assigned to both the key groups.

By assigning input keys different in functions to the first dedicated key group 112 and second dedicated key group 113, respectively, it is possible to increase functions carried out by the mobile terminal 1 and also provide a mobile terminal that users can easily use. A description will now be given of a case in which the first dedicated key group 112 is an input key group for a game operation, and the second dedicated key group 113 is an input key group for an audio operation, for example.

In this case, the user switches to the first open state for the game operation, and can use the mobile terminal 1 without exposing the keys for the audio operation which are unnecessary keys. On the other hand, the user switches to the second open state for the audio operation, and can use the mobile terminal 1 without exposing the keys for the game operation which are unnecessary keys. In other words, the user can perform key operation while a part of the input keys which are unnecessary is hidden depending on a purpose. Therefore, it is possible to realize a mobile terminal having various functions but providing easy key operations.

On the other hand, when the same function is assigned to the first dedicated key group 112 and the second dedicated key group 113, a mobile terminal that are easily used for both right-handed users and left-handed users can be provided. It is considered that a right-handed user mainly uses the right hand for the input operation on the mobile terminal 1, and that the user feels that the configuration allowing the operation in the second open state (state in Fig. 4B) is easy to use. Moreover, it is considered that a left-handed user mainly uses the left hand for the input operation on the mobile terminal 1, and that the user feels that the configuration allowing the operation in the first open state (state in Fig. 4A) is easy to use.

As described above, the mobile terminal 1 according to the present embodiment has the configuration that the two torsional springs 31, 32 are provided between the operation-side housing 10 and the display-side housing 20. A description will now be given of an operation of the two torsional springs 31, 32 when the closed state is switched to the first open state referring to Figs. 3, 4A, 4B, and 5. Since an operation of the torsional springs 31, 32 when the closed state is switched to the second open state is the same except for a point that the rotational direction of the torsional springs 31, 32 rotatably provided are opposite, a description thereof is omitted.

The biasing forces of the two torsional springs 31, 32 make it difficult for the display-side housing 20 to slide with respect to the operation-side housing 10 in the closed state (state in Fig. 3). In other words, it is difficult for the display-side housing 20 to slide by itself with respect to the operation-side housing 10, and to reach the first open state or the second open state. Therefore, the user has to apply a force in the sliding direction in order to slide the display-side housing 20 upward and rightward with respect to the operation-side housing 10.

When the user applies a force in the sliding direction, the torsional springs 31, 32 are compressed while being rotated counterclockwise (refer to Figs. 3 and Fig. 5), and are compressed most strongly at an approximately middle point (corresponding to a state shown in Fig. 5) between the start of the slide and the end thereof. Then, when the position of the display-side housing 20 with respect to the operation-side housing 10 slides over the most compressed state, reaction forces of the compressed torsional springs 31, 32 assist the sliding movement of the display-side housing 20. While the sliding movement is assisted, the two torsional springs 31, 32 are extended while being further rotated counterclockwise. At the time of shifting to the first open state (at the time of the completion of the sliding movement), the torsional springs 31, 32 have biasing force approximately the same as those in the closed state.

The mobile terminal 1 is hard to slide in any cases of among the closed state, the first open state, and the second open state due to the presence of the torsional springs 31, 32 unless the user applies a force at the beginning. When a predetermined force is applied for the sliding movement, the sliding movement is then assisted by the torsional springs 31, 32 thereafter, resulting in a semi-automatic slide movement.

Though the mobile terminal 1 according to the present embodiment is provided with the torsional springs (assist springs) 31, 32 for assisting the sliding movement of the display-side housing 20, the assist springs may not be provided. Moreover, the assist springs are not limited to torsional springs, and may be other springs as long as they provide the action described above. For example, the assist spring may be formed by multiple coil springs.

When the display-side housing 20 is viewed in the plane from above, the mobile terminal 1 according to the present embodiment is configured such that the display-side housing 20 slides upward and rightward, and upward and leftward with respect to the operation-side housing 10, as described above. As a result, it is possible to provide a mobile terminal easy to use for a user despite of diversified functions. Moreover, it is possible to provide a mobile terminal which both a right-handed user and left-handed user can use easily. Moreover, the mobile terminal 1 according to the present embodiment includes the two housings, and the number of the housings constructing the slide-type mobile terminal is minimized, resulting in advantages in the number of components and the cost.

It is understood that the above-described embodiment is an example of mobile terminals to which the present invention is applied, the scope of the mobile terminal to which the present invention is applied is not limited to the configuration of the embodiment.

For example, in the mobile terminal 1 according to the embodiment described above, the display-side housing 20 is configured to have the guide groove 22 in the approximately M shape in which the first guide groove 22a and the second guide groove 22b, each groove in approximately V shape, are continuously connected to each other. However, it is not intended that the applicable range of the present invention is limited to this configuration. In other words, the first guide groove 22a and the second guide groove 22b may not be continuous, for example. The continuing two guide grooves 22a, 22b as in the present embodiment is advantageous in the reduction of the size of the mobile terminal 1.

Moreover, regarding the guide groove provided on the display-side housing 20, one guide groove which is approximately upside-down V shaped, or three or more guide grooves which are approximately upside-down V shaped may be provided. In this case, a change in the configuration such as a change in the number of the guide pins provide on the operation-side housing 10 is necessary in response to the above configuration. Moreover, when one approximately upside-down V shaped guide groove is provided, the support from the display-side housing 20 to the operation-side housing 10 becomes unstable (tends to rotate). Accordingly, functions for preventing the rotation, such as the guide pin which is shaped in a rectangular shape, are necessary.

Further, contrary to the mobile terminal 1 according to the present embodiment, a guide groove may be provided on the operation-side housing 10, and guide pins which are slidably engaged with and held by the guide groove may be provided on the display-side housing 20. In this case, the form of the guide groove may be one approximately V shaped groove or multiple approximately V shaped grooves which are arranged.

In addition, the mobile terminal 1 according to the present embodiment is configured such that the guide pins 12, 13 and the guide groove 22 constructing the sliding support mechanism which supports the display-side housing 20 in a manner as to slide with respect to the operation-side housing 10 are directly attached to the housings 10, 20. However, it is not intended that the configuration of the mobile terminal to which the present invention is applied is limited to this configuration.

The sliding support mechanism may be configured as a unit as shown in Fig. 6A, for example, and this unit (slide unit) may be attached to the operation-side housing 10 and the display-side housing 20. Fig. 6A shows an example of cases where the slide unit is employed. This slide unit 40 includes a plate 41 for a pin (first member) that includes a guide pin 41a and that is fixed to the operation-side housing 10, and a plate 42 for a groove (second member) that has a guide groove in an approximately M shape as in the present embodiment, for example, and that is fixed to the display-side housing 20.

Moreover, as shown in Fig. 6B, the guide pin 12 constructing the sliding support mechanism may be directly attached to the operation-side housing 10, and the guide groove 22 may be formed on the plate 42 for groove to be fixed to the display-side housing 20.

The present invention is suitable for a mobile terminal typified by a mobile device such as a smart phone.

## Claims

1. A mobile terminal comprising:
a first housing;
a second housing overlaid on the first housing; and
a sliding support mechanism that supports the second housing in a manner as to slide with respect to the first housing, wherein
a plurality of input portions covered over by the second housing when the second housing is placed at a first position is provided on the first housing, and wherein
the position of the second housing, that is viewed in the plane from above, can be switched by the sliding support mechanism among: the first position; a second position which is located at an upper right position with respect to the first position, and at which a part of the plurality of input portions is exposed; and a third position which is located at an upper left position with respect to the first position, and at which a part of the plurality of input portions that is different from the part exposed in case of the second position is exposed.

2. The mobile terminal according to Claim 1, wherein the plurality of input portions includes a shared portion which is exposed when the position of the second housing is switched from the first position to either of the second position or the third position, a first dedicated portion which is exposed only when the position of the second housing is switched from the first position to the second position, and a second dedicated portion which is exposed only when the position of the second housing is switched from the first position to the third position.

3. The mobile terminal according to Claim 2, wherein the first dedicated portion and the second dedicated portion have a different function from each other.

4. The mobile terminal according to Claim 2, wherein the first dedicated portion and the second dedicated portion have a same function.

5. The mobile terminal according to any one of Claims 1 to 4, wherein at least a part of members forming the sliding support mechanism is directly attached to the first housing and the second housing.

6. The mobile terminal according to any one of Claims 1 to 4, wherein the sliding support mechanism is formed by a unit member including a first member that is fixed to the first housing, and a second member that is fixed to the second housing and is arranged in a manner as to slide with respect to the first member.

7. The mobile terminal according to any one of Claims 1 to 6, wherein the sliding support mechanism includes at least one guide groove that is shaped in either one of an approximately upside-down V shape or an approximately V shape and that is provided on either one of a side of the first housing or a side of the second housing, and at least one guide pin that is provided on the other one of the side of the first housing and the side of the second housing, and that is slidably engaged with and held by the guide groove.

8. The mobile terminal according to any one of Claims 1 to 7, wherein the sliding support mechanism includes an assist spring which assists the sliding movement of the second housing.

9. The mobile terminal according to any one of Claims 1 to 6, wherein:
a first guide groove and a second guide groove, each groove being in an approximately upside-down V shape, are provided in parallel on a side of the second housing; and wherein
a first guide pin which is slidably engaged with and held by the first guide groove, and a second guide pin which is slidably engaged with and held by the second guide groove are provided on a side of the first housing.

10. The mobile terminal according to Claim 9, wherein the first guide groove and the second guide groove are continuously connected with each other.

11. The mobile terminal according to Claim 9 or 10, wherein
the sliding support mechanism includes a first torsional spring and a second torsional spring, both springs serving as assist springs for assisting the sliding movement of the second housing;
one end of the first torsional spring is rotatably supported by the first guide pin and the other end is rotatably supported by a first spring holding pin provided on the side of the second housing; and
one end of the second torsional spring is rotatably supported by the second guide pin and the other end is rotatably supported by a second spring holding pin provided on the side of the second housing.
